Europäisches Patentamt

European Patent Office

Office européen des brevets

(19)

(11) **EP 1 541 505 A1**

(12) **EUROPEAN PATENT APPLICATION**
published in accordance with Art. 158(3) EPC

(43) Date of publication:
**15.06.2005 Bulletin 2005/24**

(21) Application number: **02765599.2**

(22) Date of filing: **19.09.2002**

(51) Int Cl.⁷: **B65G 17/08**, B65G 17/42

(86) International application number:
**PCT/JP2002/009632**

(87) International publication number:
**WO 2004/026734 (01.04.2004 Gazette 2004/14)**

(84) Designated Contracting States:
**AT BE BG CH CY CZ DE DK EE ES FI FR GB GR
IE IT LI LU MC NL PT SE SK TR**

(71) Applicant: **Maeda, Hiromu
Hamakita-shi, Shizuoka 434-0045 (JP)**

(72) Inventor: **Maeda, Hiromu
Hamakita-shi, Shizuoka 434-0045 (JP)**

(74) Representative:
**Leson, Thomas Johannes Alois, Dipl.-Ing.
Patentanwälte
Tiedtke-Bühling-Kinne & Partner,
Bavariaring 4
80336 München (DE)**

(54) **THREE-DIMENSIONAL CARRYING CONVEYOR**

(57) A three-dimensional conveyor is provided which can be curved in a small curvature even with a wide top plate unit for forming a conveyance face and can be moved in three-dimensional directions, vertically, laterally, or slantingly, and which is turnable around the conveyance direction axis. The three-dimensional conveyor has top plate units connected by couplers. The respective top plate unit has two ball-holding cavities at the front portion and the rear portion thereof for holding terminal balls of the coupler, as the joints. The terminal balls are fit loosely into the ball-holding cavities non-detachably, so that the top plate units can be slanted freely within a prescribed angle range. Further, the top plate units have respectively an engaging portion on each side of the ball-holding cavity on the bottom face of the top plate units to engage with a standardized sprocket to be driven by the rotating driving force the sprocket in a desired direction, vertically or horizontally.

Fig. 1

## Description

TECHNICAL FIELD

The present invention relates to a three-dimensional conveyor which enables arrangement of the conveyance line in two-dimensional or three-dimensional directions, with high freedom of arrangement, in a small space effectively, the conveyor being capable of changing direction of conveyance line of articles such as a tray or container holding a fruit, a foodstuff, or a like article to U-turn in a small curvature or to travel upward or downward on multiple circulation stairs in a small space.

BACKGROUND ART

Various conveyors have been disclosed for conveying articles in three-dimensional directions. For instance, Japanese Patent Application Laid-Open No. 2001-139121 discloses a chain structure for three-dimensional conveyance line. Japanese Patent Kohyo 2001-517591 (Published Japanese Translation of PCT Application) discloses a chain conveyor system.

The chain structure disclosed in the above Japanese Patent Application Laid-Open No. 2001-139121 is constituted of top plates for carrying articles thereon and linking portions provided at the bottom faces of the top plates. The length in the front-to-rear direction, namely the length of the one top plate in the conveyance direction, is not larger than the chain pitch. The linking portion has a protrusion head projecting frontward from middle of the front edge of the bottom face of the top plate and a pair of legs projecting rearward from the right end and left end of the rear edge of the bottom face of the top plate, and the frontward protrusion of the next top plate is inserted between the legs and connected thereto by a pivot pin, successively to constitutes a chain. The chain is made bendable also rightward and leftward by lengthening the pivot pin holes of the protrusion head to be longer in the conveyance direction.

The chain conveyor system disclosed in Japanese Patent Kohyo 2001-517591 comprises links; each link comprising a linking member, a connecting pin, and a bearing element. The linking member has a cargo conveying means (top plates), and a lower linking member portion having a first end (frontward projection) and a second end (legs protruding rearward in two branches). The links are formed by inserting the first end (frontward projection) of the next linking member between the branched second ends of the foregoing linking member, and connecting them by a connecting pin by bringing the bearing sheet inside the first end to contact the spherical face of the bearing element. The bearing element having a spherical face in the linking portion enables free bending of the chain vertically and laterally within a predetermined range.

As described above, any of chains of conventional conveyors for three-dimensional conveyance has a chain link portion and a top plate integrated in a ratio of 1:1 into one body, each top plate having only one joint. Therefore the bending is limited within the range that the link and the top plate at the front side will not collide against the link and the top plate of the next link.

Accordingly, a conveyor chain line having a large top plate for conveying a large article cannot be curved at a small curvature radius, and a large area is necessary for installing such a conveyor chain, disadvantageously.

Moreover, the top plates of the above known conveyor, in the returning travel in endless running, is necessarily reversed with the conveying face turned upside-down, so that the conveyor is utilized only one-way, without utilizing the returning travel for article conveyance.

Furthermore, any of the conventional conveyors employing a chain can be driven only by a special sprocket having a structure specially designed for the chain only: generally used sprockets for roller chain of JIS or ISO Standard are not useful therefor.

The present invention is made to solve the above problems. A first object of the present invention is to decrease the radius of curvature of a curved conveyance line of an endless conveyor for conveying an article thereon to save installation space for the conveyor.

A second object of the present invention is to enable article conveyance both in forward travel on an upstair and in returning travel on a downstair of an endless conveyor by constituting the article conveying face to direct upward in the forward travel as well as in the returning travel of the conveyor.

A third object of the present invention is to improve durability of the conveyor and smoothness of the conveyance by a long conveyor by dispersing the conveyance load for the conveyor not to concentrate into one position.

DISCLOSURE OF THE INVENTION

The present invention has been made to accomplish the above first object and the second object.

The present invention provides a three-dimensional conveyor having plural top plate units constituted respectively of a top plate having a top face for mounting a conveyed article and a clasping plate fixed to a bottom face of the top plate for fitting and holding couplers, the top plate units being connected together by the couplers to construct an endless conveyance path in three-dimensional directions. In the conveyor of the present invention, two ball-holding cavities are formed in a front portion and a rear portion of each of the top plate units and coupler rod insertion holes are formed to pass through from the ball-holding cavities to a front face or rear face of the top plate unit so as to enable movement of the couplers in three-dimensional directions within a prescribed angle range; and the coupler is constituted of a coupler rod inserted in the coupler rod insertion hole and two terminal balls at the ends of the coupler rod, the respective balls being fit loosely into the ball-holding cavities turnably, whereby the respective top plate units coupled together by the couplers are rotatable in 360° around the center line in traveling direction of the top plate units, and are turnable freely upward, downward, rightward, leftward, or slantingly around the center of the terminal ball as the supporting point.

In a preferred embodiment of the present invention, the distance between the centers of the two ball-holding cavities formed in the front portion and the rear portion of the top plate unit and the distance between the centers of the two terminal balls at the ends of the coupler are both designed to be equal to half the arrangement pitch of the adjacent top plate units to make uniform the distances between the adjacent joints.

In a preferred embodiment of the present invention, a sprocket-engaging portion for engagement with a sprocket for conveyor driving is provided on each of the right and left sides of the ball-holding cavities on the top plate or clasping plate of the top plate unit to drive the conveyor by direct engagement of the top plate units with the sprocket.

In a preferred embodiment of the present invention, a U-shaped groove opening outward is provided on each of the right and left outsides of the sprocket-engaging portion formed on the top plate or the top plate and clasping plate, and the top plate unit is guided, by engagement of a guide rail with the guide groove, in three-dimensional directions along a conveyance line formed by the guide rail.

In a preferred embodiment of the present invention, the forward path and returning path of the endless conveyor constituted of the top plate units connected by the couplers are arranged in two stairs, and the top plate units are reversed in the returning path to bring the top plate faces upward for conveyance of an article in both the forward path on the upper stair and the returning path on the lower stair.

In a preferred embodiment of the present invention, a cushioning material is provided on the top plate face for cushioning the conveyed article.

In a preferred embodiment of the present invention, the cushioning material provided on the top plate face is a soft fuzzed member or a gill-shaped member.

In a preferred embodiment of the present invention, slip-stopping ledges are provided at intervals of a prescribed number of the top plate units for preventing slip of the conveyed articles on the top plate faces of the top plate units connected together.

In a preferred embodiment of the present invention, the coupler is constituted of a metal material, and the peripheral outside faces of the terminal balls are coated with a hard synthetic resin material having a low frictional coefficient, or are treated for film coating to lower the frictional coefficient.

In a preferred embodiment of the present invention, a lubricant pool for filling a lubricant is provided in a portion of the ball-holding cavity formed in the top plate unit.

In a preferred embodiment of the present invention, a lubricant pool is provided in a portion of the terminal ball formed at the end of the coupler.

In a preferred embodiment of the present invention, an article-catching mechanism for catching a conveyed article is provided on the top face of the top plate.

In a preferred embodiment for achieving the third object of the present invention, a projecting pin is provided to project downward at the center of bottom face of each of the top plate units, and a laterally rotating sprocket is engaged with the projecting pins to drive the conveyor constructed in one level or plural stairs.

In a preferred embodiment of the present invention for achieving the aforementioned third object, the three-dimensional conveyor has rollers, each of the rollers being pivotally supported rotatably on the outside periphery of the projecting pin projecting vertically downward, and is allowed to engage with the laterally rotating sprocket.

The rollers, which are made in the same shape and size as the rollers of the roller chain of JIS or ISO Standard, can be used by engaging with laterally rotating sprockets of the same Standard.

In the three-dimensional conveyor of the present invention of the aforementioned constitution, the respective top plate units have ball-holding cavities at the front portion and rear portion thereof for the joints of the chain structure, and terminal balls at the ends of a coupler are held non-detachably in the ball-holding cavities to connect the adjacent top plate units. The two joints on respective top plate units enable decrease of a curvature of the conveyor, whereby the endless conveyor can be curved in U-turn in a small space, or the conveyance line can be made in a long ellipsoidal rotary shape in multi-stairs. The provision of two joints for one top plate unit makes smooth the turning movement of the conveyor at a curve of the conveyance path.

The distance between the centers of the two ball-holding cavities formed in the front portion and the rear portion of the top plate unit and the distance between the centers of the two terminal balls at the ends of the coupler are designed to be equal to half the arrangement pitch of the adjacent top plate units. Therefore, the distance can be designed to meet the pitch size of JIS or ISO Standard for double-pitch roller chains for conveyors, so that a roller chain sprocket of the Standard can be employed.

A U-shaped groove open outward is provided on each of the top plate units, thereby the top plates are guided by engagement with a guide rail readily to travel along curved conveyance line in three-dimensional directions even if the conveyance line is curved complicatedly.

The respective top plate units are connected by holding the terminal balls of the couplers in the ball-holding cavities. Thereby the respective top plate units are turnable freely upward, downward, rightward, leftward, or slantingly in 360° around the center line in traveling direction of the top plate units, and the top plate units can be reversed in the returning path of an endlessly traveling conveyor in two stairs to bring the conveying face upward.

The cushion material, which may be provided on the top faces of the top plates constituting the top plate units, enables conveyance of articles liable to be scratched or damaged, without damage.

The soft fuzzed member or the gill-shaped member, which may be provided on the top faces of the top plates constituting the top plate units, serves to hold the conveyed article stably on the top plate unit, even an article having unstable bottom, or a slidable article, by the stable holding action of the fuzzed member or the gill-shaped member.

The slip-stopping ledges, which may be provided at prescribed intervals on the top plate faces of the top plate units, enable stable conveyance of the conveyed article without slipping or falling on or from the top plate face even at an ascending or descending portion around a multi-level crossing point of the conveyance line.

The couplers, which may be formed from a steel material, have sufficient strength and rigidity even if small in size, are less liable to cause elongation of the total length of the conveyor, enabling construction of a long conveyance line.

The lubricant pool, which may be provided in the coupling portion of the top plate units with the couplers, enables a long-term drive of the conveyor without lubricant feed.

The article-catching mechanisms, which may be provided on prescribed top plate units, enable stable conveyance of instable articles liable to roll or fall down. In particular, with the mechanisms, the conveyance line can be constructed three-dimensionally with inclination downward, sideward, or a like manner.

The conveyor having the article-catching mechanism can be constituted such that the top plate units guided by the guide rail are turned successively spirally around the coupler axis of the conveyor chain. Thereby, an article such as a container held upright on the top face of the top plate unit, with progress of conveyance, can be turned sideways, and further reversed upside-down to discharge the content in the container readily during the conveyance.

The conveyor having a projecting pin on the bottom face of the respective top plate units can be driven by engagement of the pin with a laterally rotating sprocket placed suitably on the conveyance line. Otherwise, a roller may be pivotally supported onto the projecting pin and the roller is allowed to engage with the laterally rotating sprockets placed suitably on the conveyance line to drive the conveyor. Thereby, at a suitable position on the conveyance line including a direction change portion at a change angle of 90° or 180° where the conveyor driving resistance is strong, a driving force can suitably applied supplementally to the top plate units (conveyor) through the projecting pins at a suitable site in the conveyance line. Thereby, the pulling load for a unit length of the conveyor can be reduced, the conveyor driving is smoothened, and the durability of the conveyor is improved.

BRIEF DESCRIPTION OF THE DRAWINGS

Fig. 1 is a plan view of a first embodiment of the three-dimensional conveyor of the present invention with the main portion broken away.

Fig. 2 is a side view of a first embodiment of the three-dimensional conveyor of the present invention with the main portion broken away.

Fig. 3 is an explanatory drawing of a first embodiment of the three-dimensional conveyor of the present invention viewed from the front side.

Fig. 4 illustrates the operation of a top plate unit of the first embodiment of the three-dimensional conveyor of the present invention.

Fig. 5 illustrates the operation of a top plate unit of the first embodiment of the three-dimensional conveyor of the present invention at a curve of a conveyance guide.

Fig. 6 illustrates engagement of top plate units with the driving sprocket in the first embodiment of the three dimensional conveyor of the present invention.

Fig. 7 illustrates a state of combination especially of a top plate and a clasping plate of the three-dimensional conveyor of the present invention viewed from front side in a combination state different from that shown in Fig. 3.

Fig. 8 is a sectional view of the three-dimensional conveyor taken along line X-X in Fig. 7.

Fig. 9 illustrates an example of the state of reversal of the top plate unit in the returning path of the conveying line of the three-dimensional conveyor of the present invention.

Fig. 10 illustrates a coupler for the three-dimensional conveyor of the present invention with the terminal ball portion coated with a hard resin.

Fig. 11 illustrates a coupler employed for the three-dimensional conveyor of the present invention with the terminal ball portion having a lubricant-holding pool.

Fig. 12 illustrates a top plate unit having a fuzzed member on the top plate face of the three-dimensional conveyor of the present invention.

Fig. 13 illustrates a top plate unit having a slip-stopping ledge on the top plate face of the three-dimensional conveyor of the present invention.

Fig. 14 illustrates a top plate unit having catching arms on the top plate face of the three-dimensional conveyor of the present invention.

Fig. 15 is a plan view of a main portion of a second embodiment of the three-dimensional conveyor of the present invention at a curve of the conveyance line.

Fig. 16 is an explanatory sectional view of the second embodiment of the three-dimensional conveyor taken along line Y-Y in Fig. 15.

Fig. 17 is an explanatory front view of a top plate unit of the second embodiment of the three-dimensional conveyor of the present invention.

Fig. 18 illustrates a conveyance line of the second embodiment of the three-dimensional conveyor of the present invention.

BEST MODE FOR CARRYING OUT THE INVENTION

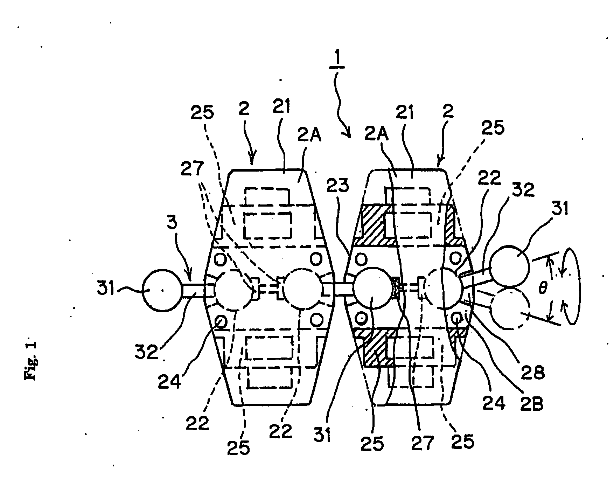

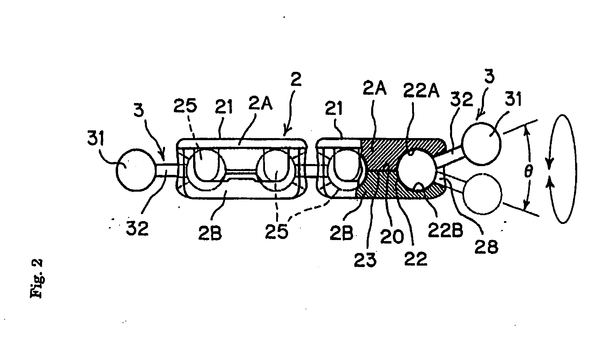

The present invention is explained below in detail by reference to Figs. 1-14.

The numeral 1 denotes a conveyor. The conveyor 1 is constituted of a number of top plates 2, and couplers 3 for coupling the adjacent top plate units 2 in sequence. Each of the top plate unit 2 is constituted of a top plate 2A having a top plate face 21 for holding a conveyed article thereon, and a plate bottom face 23; and a clasping plate 2B having a clasping face 20 to fit onto the plate bottom face of top plate 2A.

On the top plate unit 2, two ball-holding cavities 22 are formed in a nearly semispherical shape separately in parallel to the top plate unit travel direction.

The ball-holding cavity 22 is formed in a nearly spherical shape by combination of a nearly semispherical concavity 22A formed on the bottom face 23 of the top plate 2A and a nearly semispherical concavity 22B formed on the clasping face 20 of the clasping plate 2B. The terminal balls 31 at the ends of the couplers 3 are loosely fitted into the ball-holding cavities 22, and then the clasping face 20 of the clasping plate 2B is put to the bottom face 23 of the top plate 2A and screwed thereon to prevent getting-off of the coupler 3. The clasping plate 2B is fixed to the top plate 2A into one body by screws not shown in the drawings in screw holes 24.

A coupler rod insertion hole 28 for insertion of a coupler rod is formed from the center of the ball-holding cavity 22 in the conveyor 1 travel direction in a taper shape at each of the both ends of the top plate unit 2 in corporation of the top plate 2A and the clasping plate 2B.

The coupler 3 is constituted integrally of a coupler bar 32 capable of passing through the above-mentioned coupler rod insertion hole 28, and terminal balls 31 in a size to fit loosely into the ball-holding cavity 22 fixed to the ends of the coupler bar 32.

The adjacent top plate units 2 are coupled together by the couplers 3 by the procedure shown below.

The clasping plate 2B is separated from the bottom face 23 of the top plate 2 to open the ball-holding cavities 22. The coupler rods 32 are placed in the coupler rod insertion holes 28, and terminal balls 31 of the coupler 3 are fitted into the semispherical concavities 22A. Then the clasping plate 2B is again attached. Thereby the top plate units 2 are coupled.

The ball-holding cavities 22 formed in the top plate units 2 become bending joints of the conveyor, in two positions at the front portion and the rear portion in the travel direction of the top plate unit 2. The distance (interval) between the centers of the two ball-holding cavities 22, and the distance (L) between the centers of the terminal balls 31 formed on the both ends of the coupler 3 are designed to be half the pitch P of the adjacent top plate units 2 [(1/2)P)]. The bendable joints at two positions on one top plate unit 2 enable decrease of the curvature radius of the conveyor.

Specifically, the distance (W) between the centers of the ball-holding cavities 22 on the forward part and rear part of one top plate unit 2, and the distance (L) between the centers of the terminal balls 31 of the coupler 3 are the same:

$$W = L = (1/2)P$$

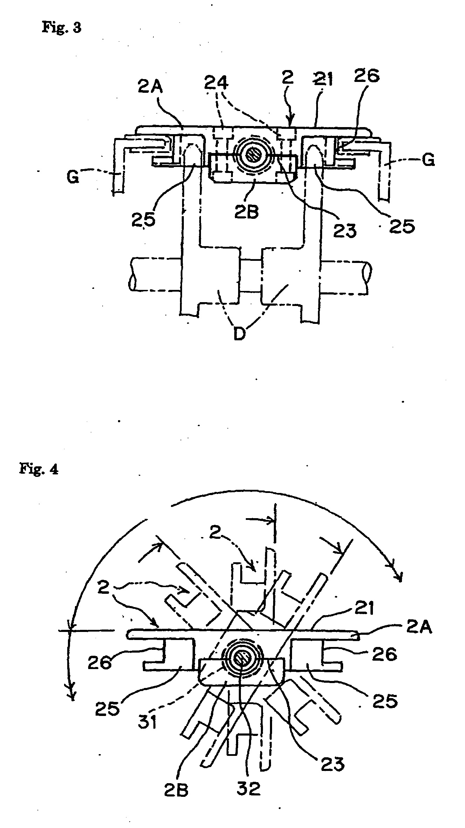

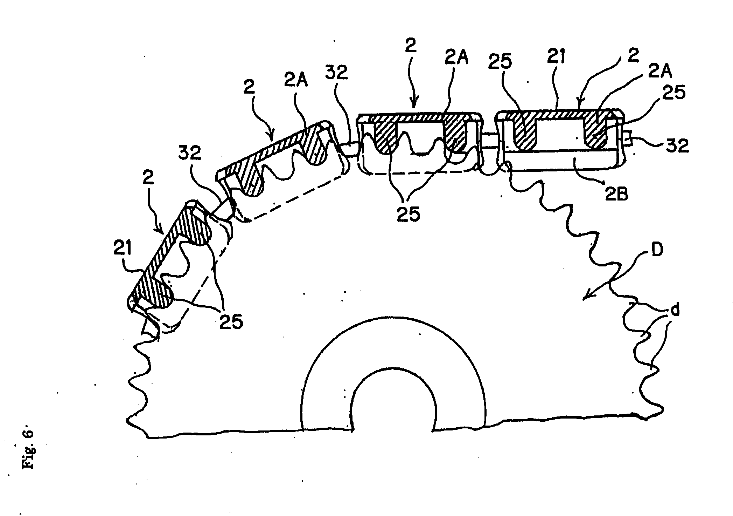

The numeral 25 indicates portions of engagement with a sprocket. The sprocket engaging portions are formed at the bottom face 23 of the top plate 2A constituting the top plate unit 2, on the both sides of the ball-holding cavities 22, across the conveyor traveling direction. This sprocket engagement portion 25 is formed for engagement with the driving sprocket D as shown in Figs. 3 and 6.

The sprocket engagement portion is designed to be in a shape corresponding to chain links and rollers of the roller chains in accordance with JIS, ISO, or a like Standard to be drivable by a driving sprocket D of a standard teeth shape d.

Therefore, the driving sprocket engagement portions 25 provided in the top plate units are formed in a shape corresponding to the roller outside diameter, chain link, and pitch of a double-pitch roller chain standardized according to JIS-B 1803-1998, or the double pitch precision roller chains and sprockets for transmission and conveyors of ISO 1275:1995, as shown in Fig. 6

The numeral 26 denotes a guide groove which has a U-shaped cross-section and is open toward the right or left side in adjacency to the sprocket engagement portion 25 formed in the top plate 2A, as shown in Figs. 3 and 4. Guide rails G are engaged with the guide grooves 26 to drive the top plate units 2, namely the conveyor 1, along the designed conveyance line.

The numeral 27 denotes a lubricant pool. This lubricant pool 27 is provided in a portion of the ball-holding cavity 22, and supplies the lubricant between the peripheral face of the terminal ball 31 of the coupler 3 and the internal face of the ball-holding cavity 22. Thereby the conveyor 1 can be driven without lubricant supply.

The numeral 28 denotes a coupler rod insertion hole. This coupler rod insertion hole 28 opens from the ball-holding cavity 22 toward the front face or rear face of the top plate unit 2 such that the coupler rod 32 of the coupler 3 for coupling the top plate units 2 is allowed to swing freely within a prescribed angle θ and to rotate freely around the axis of the coupler 3. This coupler rod insertion hole 28 is in a shape of a cone diverging from the ball-holding cavity 22 toward the outside face of the top plate unit 2 at the front or rear side in the traveling direction.

A conveyor 1 which is constituted of a number of top plate units 2 of the above construction coupled by a number of couplers 3 in a chain form is flexible upward, downward, rightward, leftward, and slantingly in three-dimensional direction within the designed angle range.

The top plate units 2, which are linked together by couplers 3 having ball-shaped ends 31, are turnable around the center line of traveling direction to be horizontal, slanted, vertical, and downward (reversed) in 360° directions as shown in Fig. 4: the orientation of the top plate unit 2 can be changed by design of a guide rail G.

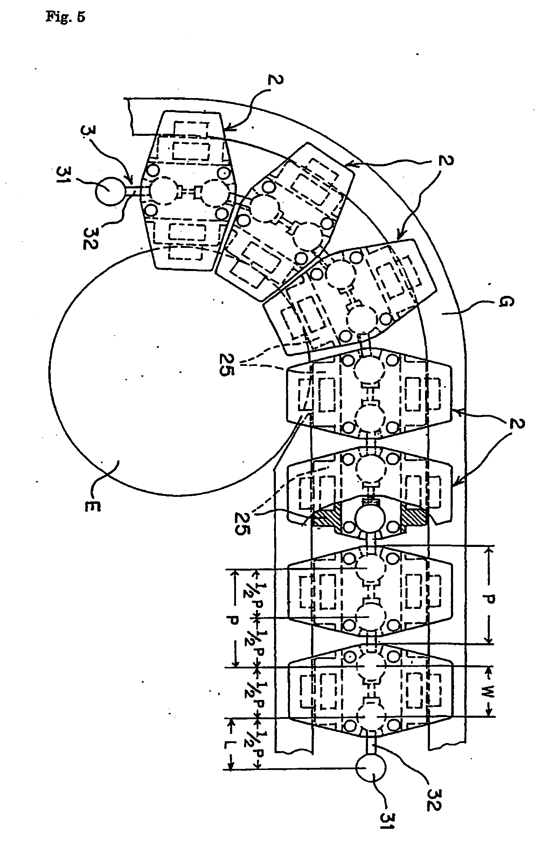

In such a manner, the conveyor 1 which is constituted of a sequence of the top plate units 2 capable of being curved in three-dimensional directions can be made in a desired conveyance line by design of the guide rail G. In particular, for travel direction change by 90° or 180° U-turn in a sharp bend with a small curvature, the circular guide rail E of a rotational disk shape as shown in Fig. 5 is effective for smooth travel of the conveyor 1 at the sharp curve.

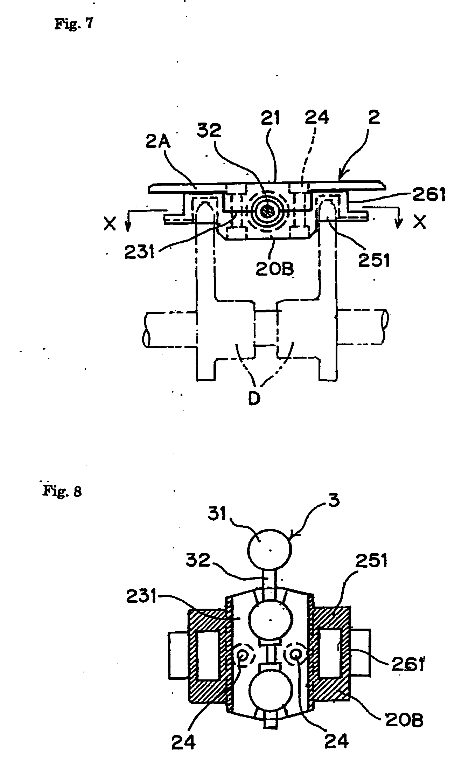

Next, a constitution of another example of the top plate unit 2 is explained by reference to Figs. 7 and 8. In this example, a modification is made in the contact face 231 between the top plate 2A and the clasping plate 20B of the top plate unit 2 such that the sprocket engagement portion 251 is formed in the clasping plate 20B. That is, differently from the first example shown in Fig. 3, the sprocket engaging portion 251 is formed on each of the right and left portions of the clasping plate 20B, and the guide grooves 261 are formed by corporation of the clasping plate 20B and the top plate 2A.

In this example, since the sprocket engaging portions 25 need not be formed in the top plate 2A itself, the top plate 2A can be formed in a simple shape, and the top face 21 of the top plate 2A can readily be worked in various ways.

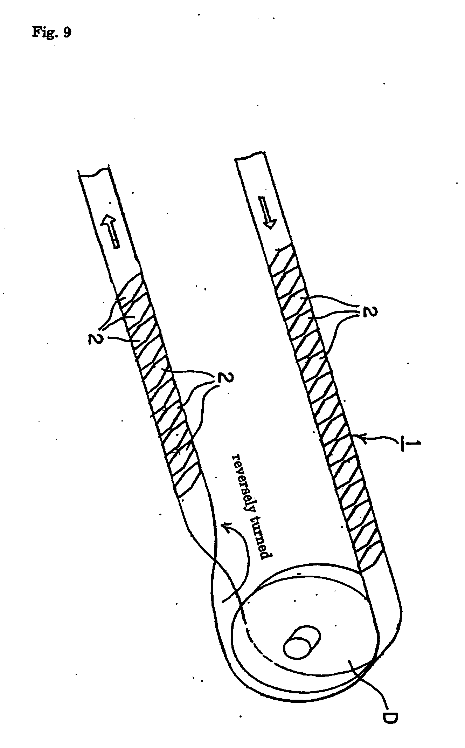

Fig. 9 shows an example of endless conveyor 1 running in two stairs, upper and lower. The upper stair is utilized as a forwarding path, and the lower stair is utilized as a returning path. In the returning path, the top plate units are reversed upside down to bring upward the top face 21 of the top plate unit 2 in the returning travel again similarly as in the orientation of the top plate 21 of top plate unit 2 in the forward path, whereby the returning path can be utilized also for conveying articles.

This example shows the feature of the present invention: the feature that the top plate unit 2 is turnable around the center line of the travel horizontally, slantingly, vertically, downwardly, and reversely in 360° direction; the top plate units 2 can be turned upside-down to orient the conveyance face upward also in the lower returning path; and the upper conveyance line and the lower conveyance line are turnable rightward and leftward freely in a desired curve.

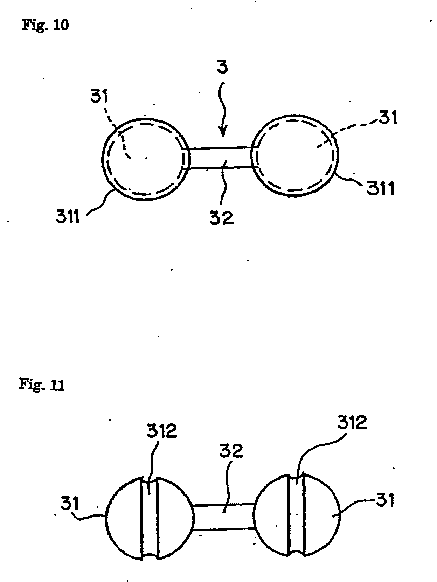

Fig. 10 shows an example in which the terminal balls 31 of the coupler 3 made of a metal material is coated with a hard synthetic resin 311 having a low friction coefficient. Otherwise, the outside face of the terminal balls may be surface treated for Teflon coating for decrease of the friction coefficient.

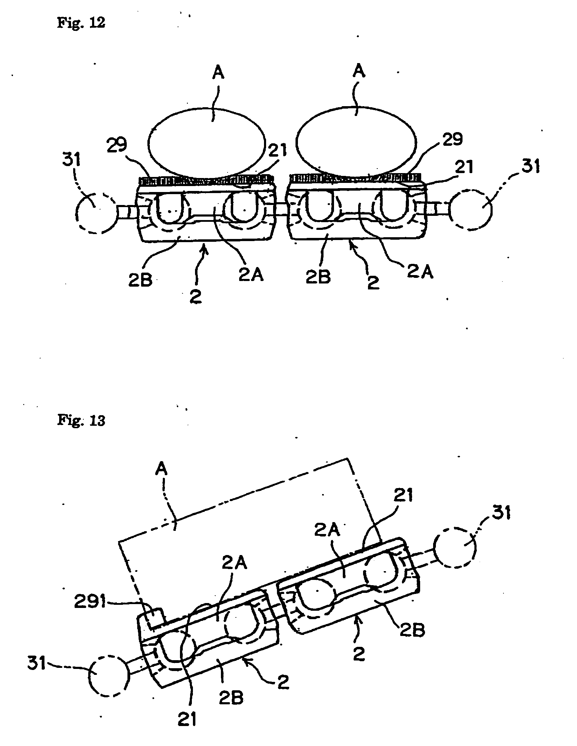

Fig. 11 shows an example in which the terminal balls 31 of the coupler 3 has lubricant pools 312 on the perimeter thereof.

Fig. 12 shows an example of the top plate unit having a fuzzed member or gill-shaped member 29 on the top plate face 21 of the top plate unit. This fuzzed or gill-shaped member 29 has many risings like a lawn, and is suitable for conveying an article A having a shape positionally unstable on the flat top plate face 21, such as a rollable article having a curved bottom (setting face), and an article of spherical bulk shape.

The fuzzed member 29 allows the conveyed article to sink slightly, thereby enabling stable conveyance of the article. The conveyor having this fuzzed member 29 is capable of conveying the article even on the conveyance line inclined upward of downward at a slight inclination angle of about 5-7° without causing rolling or slipping in the plate upper face 21.

Fig. 13 illustrates an example of the top plate unit having a slip-stopping ledge 291 provided at prescribed intervals of coupling with the couplers 3 on the top plate face 21 of the top plate unit. This ledge is effective for conveyance of an article having a slippery bottom face, or conveyance along a curved conveyance line having an upward or downward inclined portion. This slip-stopping ledge 291 is designed to have a height that does not cause turnover even when the conveyed article (A) runs onto the ledge.

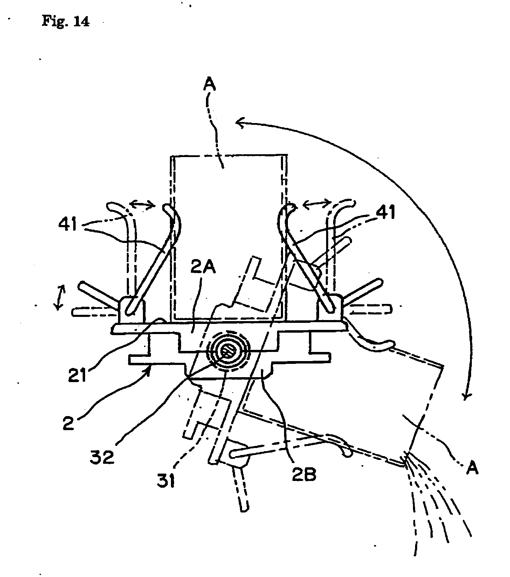

Fig. 14 illustrates an example of the top plate unit having a pair of article-catching mechanism 4 on the top plate face 21. The top plate unit having this mechanism 4 is capable of turning the article (e.g., a container) sideways during the conveyance, for example to discharge the content in the conveyed container surely.

This example utilizes one of the features of the present invention that the conveyance face of the top plate unit, namely the top plate face 21 is turnable freely from a horizontal direction to an inclined, vertical, or downward (reversed) position in 360° range. Thereby, for instance, a conveyed article such as a liquid in a container can be automatically discharged during the conveyance process.

The article-catching mechanism 4 for catching an article can be constituted of holding arms 41 openable and closable with a spring catch or dead points employing an elastic material such as a spring, or a like known technique.

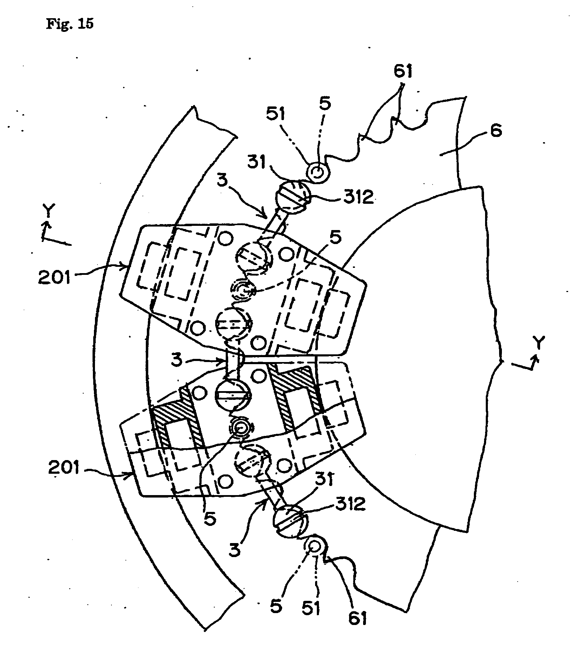

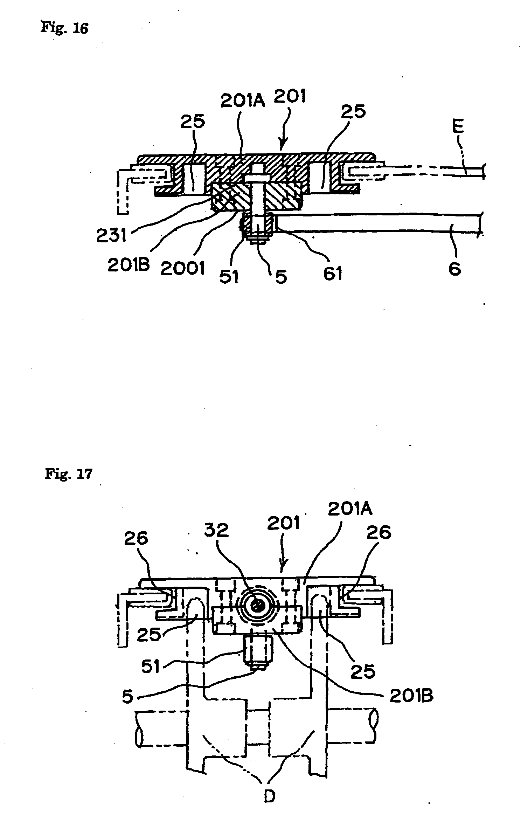

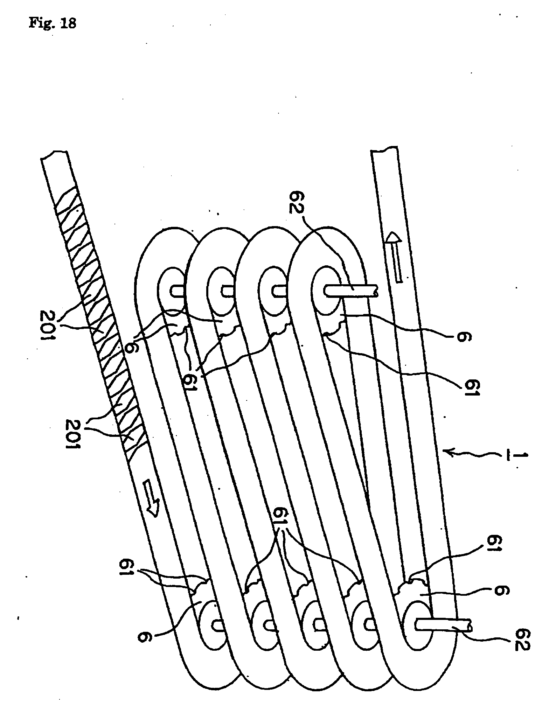

Figs. 15-18 illustrate a second embodiment of the conveyor of the present invention. Fig. 15 illustrates the top plate units at a curve portion for change of conveyance direction of the conveyor. Fig. 16 is a sectional view taken along line Y-Y in Fig. 15. Fig. 17 is a front view of the top plate unit and the clasping plate. Fig. 18 is a perspective view of the entire conveyor.

In this second embodiment, a projecting pin 5 is provided in integration with the top plate unit 201: the projecting pin 5 projecting vertically downward from the center of the bottom face 2001 of the clasping plate 201B attached to the bottom face 231 of the top plate 201A of the top plate unit 201 having the same structure as that of the top plate unit 2 of the above first embodiment. A roller 51 is fitted onto the periphery of the projecting pin 5. Otherwise, the constitution of this embodiment is the same as that of the aforementioned embodiment. Therefore, the same symbols are used to denote the corresponding members without explanation of the members.

In this embodiment, a roller 51 is fitted onto the periphery of the projecting pin 5. This roller 51 is employed to decrease contact friction with the sprocket rotating laterally mentioned later, and may be omitted. Preferably, the projecting pin 5 and the roller 51 have respectively a size to engage with the roller of a double-pitch roller chain specified in the aforementioned JIS or ISO Standard.

The numeral 6 denotes a laterally rotating sprocket having teeth 61 at uniform intervals in the circumference direction for engagement with the projecting pin 5 or the rollers 51. The center of the sprocket 6 is fixed to a driving shaft 62 directed vertically or up-and-down. Therefore, the laterally rotating sprocket 6 is rotated by rotating a driving shaft 62 by a motor or the like (not shown in the drawing) in a lateral direction (including a horizontal direction, and slightly inclined direction relative to the horizontal plane). The rollers 51 of the JIS or ISO Standard can be combinedly used with the laterally rotating sprocket 6 of the same Standard.

With a number of top plate units 201 having respectively a projecting pin 5, a spiral-shaped conveyance line can be constructed by employing laterally rotating sprockets 6 in the conveying line of a conveyor as shown in Fig. 18, as an example. In this conveying line, the rotation-driving force of the laterally rotating sprockets 6 engaging with the projecting pins 5 is transmitted through the projecting pins 5 to the conveyor, and the top plate units 201 are guided by a circular guide rail E, and the rotation-driving force of the laterally rotating sprockets is given to the top plate units at appropriate positions of the conveyor path to drive the conveyor.

According to this embodiment, in particular for driving a long conveyance line having high resistance for running (driving load of the conveyor), a conveyor driving force can be given to the conveyor at appropriate positions of in the conveyance line, whereby the conveyor driving load can be dispersed and decreased, resulting in improvement of durability of the conveyor and smooth operation of the conveyor.

In any of the above embodiments, each of the top plate units has two flexible joints. This enables decrease of the turning radius at the U-turn portion of the conveyor, and constitution of a conveyance line or a storage line capable of U-turn in a small width. Thereby, a conveyor installation area can be decreased, and a conveyance space can be effectively utilized. In the second embodiment, by combination of laterally rotating sprockets 6 with top plate units 201, the total length of the conveyor can be made larger and the conveyor can be constituted in multiple stairs to make compact the storage-conveyance apparatus.

INDUSTRIAL APPLICABILITY

As described above, the three-dimensional conveyor of the present invention has a ball-holding cavity at a front side and a rear side respectively of each of the top plate units, and a coupler having a ball at the respective ends is loosely fit into the ball-holding cavity to couple the top plate unit with adjacent top plate units by the couplers as a coupling mechanism like universal joints or a ball joints. Thereby, the respective top plate units can be slanted in any direction within a predetermined angle range relative to the axis of the conveyance direction, and can be rotated around the axis.

Therefore, in the case where an obstacle exists in front of the article conveyance direction, the conveyance line can be curved to turn aside from the obstacle or to cross over the obstacle. Since the top plate units have respectively two joints, the conveyor line can be curved in a smaller curvature and be bent in a short distance in any directions, upward, downward, rightward or leftward, to decrease the conveyor installation space.

The distance between the centers of the cavities at the both end sides of the top plate unit and the distance between the centers of the balls of the coupler are designed to be equal to half the arrangement pitch of the top plate units. Thereby the joint distances can be made shorter on bending along the conveyance line to allow the units to move in shape of a polygon nearer to a circle, whereby pulsational movement (so-called breathing) resulting from nonuniform peripheral speed caused by difference between the rotation radius of the edges and that of the side is reduced to conduct the conveyance smoothly.

Sprocket engaging portions are provided on the both outsides of the ball-holding cavity on the top plate unit. The sprocket engagement portions are designed to engage with a gear wheel of a certain pitch, namely a sprocket of a standard tooth shape of JIS Standard, so that the conveyor can be unitized or standardized readily.

The top plate units are turnable around the center line of the conveyor travel direction to be horizontal, slanted, vertical, or downward in 360° directions: the top plate units may be reversed by 180° in the returning travel on the lower stair in endless two-stair rotation movement to bring upward the top face of the top plate unit. Therefore both of the upper stair and lower stair of the endless conveyor can be employed as the article conveyance line to utilize the conveyance line space effectively.

The top plate units may have an article-catching mechanism. With the article-catching mechanism, the articles (for example, a container having a top opening) caught and conveyed on the top plate units can be tilted, or turned laterally or downward to discharge the content from the container during conveyance. Therefore, another separate line need not be provided for the content discharge or for article conveyance, which enables constitution of economical conveyance line.

The top plate units may have respectively a downward projecting pin on the lower middle portion thereof. The projecting pins make easy the change of the conveyance direction of the conveyor in an L-direction or U-direction by action of a laterally rotating sprocket or sprockets. Further, the laterally rotating sprocket or sprockets placed in the conveyance route in an appropriate position in different levels enables conveyance of a larger amount of articles in a smaller installation area of the conveyor.

To the conveyor, the driving power can be applied readily at appropriate positions to the conveyor in the conveyance route. Therefore, the driving load can be reduced even for a larger total length of the conveyor to improve the durability of the conveyor and to enable smoother operation of the conveyor.

**Claims**

1. A three-dimensional conveyor having plural top plate units constituted respectively of a top plate having a top face for mounting a conveyed article and a clasping plate fixed to a bottom face of the top plate for fitting and holding couplers, the top plate units being connected together by the couplers to construct an endless conveyance path in three-dimensional directions, wherein two ball-holding cavities are formed in a front portion and a rear portion of each of the top plate units and coupler rod insertion holes are formed to pass through from the ball-holding cavities to a front face or rear face of the top plate unit so as to enable movement of the couplers in three-dimensional directions within a prescribed angle range; and the coupler is constituted of a coupler rod inserted in the coupler rod insertion hole and two terminal balls at the ends of the coupler rod, the respective balls being fit loosely into the ball-holding cavities turnably; whereby the respective top plate units coupled together by the couplers are rotatable in 360° around the center line in traveling direction of the top plate units and are turnable freely upward, downward, rightward, leftward, or slantingly around the center of the terminal ball as the supporting point.

2. The three-dimensional conveyor according to claim 1, Wherein the distance between the centers of the two ball-holding cavities formed in the front portion and the rear portion of the top plate unit and the distance between the centers of the two terminal balls at the ends of the coupler are both designed to be equal to half the arrangement pitch length of the adjacent top plate units to make uniform the distances between the adjacent joints.

3. The three-dimensional conveyor according to claim 1 or 2, wherein a sprocket engagement portion for engaging with a sprocket for conveyor driving is provided on each of the right and left sides of the ball-holding cavities on the top plate or clasping plate of the top plate unit to drive the conveyor by direct engagement of the top plate units with the sprocket.

4. The three-dimensional conveyor according to any of claims 1 to 3, wherein a U-shaped groove opening outward is provided on each of the right and left outsides of the sprocket engagement portion formed on the top plate or the top plate and clasping plate, and the top plate unit is guided, by engagement of a guide rail with the guide groove, in three-dimensional directions along a conveyance line formed by the guide rail.

5. The three-dimensional conveyor according to any of claims 1 to 4, wherein the forward path and returning path of the endless conveyor constituted of the top plate units connected by the couplers are arranged in two stairs, and the top plate units are reversed in the returning path to bring the top plate faces upward for conveyance of an article in both the forward path on the upper stair and the returning path on the lower stair.

6. The three-dimensional conveyor according to any of claims 1 to 5, wherein a cushioning material is provided on the top plate face for cushioning the conveyed article.

7. The three-dimensional conveyor according to claim 6, wherein the cushioning material provided on the top plate face is a soft fuzzed member or a gill-shaped member.

8. The three-dimensional conveyor according to any of claims 1 to 7, wherein slip-stopping ledges are provided at intervals of a prescribed number of the top plate units for preventing slip of the conveyed articles on the top plate faces of the top plate units connected together.

9. The three-dimensional conveyor according to any of claims 1 to 8, wherein the coupler is constituted of a metal material, and the peripheral outside faces of the terminal balls are coated with a hard synthetic resin material having a low frictional coefficient, or are treated for film coating to lower the frictional coefficient.

10. The three-dimensional conveyor according to any of claims 1 to 9 wherein a lubricant pool for filling a lubricant is provided in a portion of the ball-holding cavity formed in the top plate unit.

11. The three-dimensional conveyor according to any of claims 1 to 10 wherein a lubricant pool is provided in a portion of the terminal ball formed at the end of the coupler.

12. The three-dimensional conveyor according to any of claims 1 to 11 wherein an article-catching mechanism for catching a conveyed article is provided on the top face of the top plate.

13. The three-dimensional conveyor according to any of claims 1 to 12, wherein a projecting pin is provided to project downward at the center of bottom face of each of the top plate units, and a laterally rotating sprocket is allowed to engage with the projecting pins to drive the conveyor constructed in one level or plural stairs.

14. The three-dimensional conveyor according to claim 13, wherein a roller is pivotally supported rotatably on the outside periphery of the projecting pin projecting vertically downward, and the roller is allowed to engage with the laterally rotating sprocket.

Fig. 1

Fig. 2

Fig. 3

Fig. 4

Fig. 5

Fig. 6

Fig. 7

Fig. 8

Fig. 9

reversely turned

Fig. 10

Fig. 11

Fig. 12

Fig. 13

Fig. 14

Fig. 15

Fig. 16

Fig. 17

Fig. 18

## INTERNATIONAL SEARCH REPORT

| International application No. |
|---|
| PCT/JP02/09632 |

| A. CLASSIFICATION OF SUBJECT MATTER |
|---|
| Int.Cl⁷ B65G17/08, 17/42 |

According to International Patent Classification (IPC) or to both national classification and IPC

| B. FIELDS SEARCHED |
|---|
| Minimum documentation searched (classification system followed by classification symbols) |
| Int.Cl⁷ B65G17/08, B65G17/38-17/44 |

Documentation searched other than minimum documentation to the extent that such documents are included in the fields searched

| | | | | |
|---|---|---|---|---|
| Jitsuyo Shinan Koho | 1922-1996 | Jitsuyo Shinan Toroku Koho | 1996-2002 |
| Kokai Jitsuyo Shinan Koho | 1971-2002 | Toroku Jitsuyo Shinan Koho | 1994-2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | JP 63-17712 A (Kabushiki Kaisha Imai Tekkosho),<br>25 January, 1988 (25.01.88),<br>(Family: none) | 1-3<br>6-8,12<br>4-5,9-11,<br>13-14 |
| Y | JP 61-111212 A (Iseki & Co., Ltd.),<br>29 May, 1986 (29.05.86),<br>(Family: none) | 6-8 |
| Y | JP 63-92514 A (Shinji UEKI),<br>23 April, 1988 (23.04.88),<br>(Family: none) | 6,8 |
| Y | JP 48-19273 Y1 (Okura Yusoki Kabushiki Kaisha),<br>01 June, 1973 (01.06.73),<br>(Family: none) | 12 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 December, 2002 (24.12.02) | 14 January, 2003 (14.01.03) |

| Name and mailing address of the ISA/ | Authorized officer |
|---|---|
| Japanese Patent Office | |
| Facsimile No. | Telephone No. |

Form PCT/ISA/210 (second sheet) (July 1998)